(19) Europäisches Patentamt / European Patent Office / Office européen des brevets

(11) **EP 2 212 255 B1**

(12) **EUROPEAN PATENT SPECIFICATION**

(45) Date of publication and mention
of the grant of the patent:
**03.09.2014 Bulletin 2014/36**

(21) Application number: **08848179.1**

(22) Date of filing: **28.10.2008**

(51) Int Cl.:
**C02F 3/34** *(2006.01)*          **C02F 11/02** *(2006.01)*
**C02F 3/12** *(2006.01)*

(86) International application number:
**PCT/PL2008/000075**

(87) International publication number:
**WO 2009/061224 (14.05.2009 Gazette 2009/20)**

(54) **THE METHOD OF REDUCING EXCESSIVE GROWTH OF FILAMENTOUS BACTERIA IN ACTIVATED SLUDGE, THE PROCESS OF REDUCING THE BULKING OF ACTIVATED SLUDGE AND USE OF NATURALLY OCCURRING ORGANISMS IN THE ACTIVATED SLUDGE TO PREVENT ITS BULKING**

VERFAHREN ZUR VERRINGERUNG DES ÜBERMÄSSIGEN WACHSTUMS VON FADENBAKTERIEN IN BELEBTSCHLAMM, VERFAHREN ZUR VERRINGERUNG DES BLÄHENS VON BELEBTSCHLAMM UND VERWENDUNG VON NATÜRLICH VORKOMMENDEN ORGANISMEN IN DEM BELEBTSCHLAMM ZUR VERHINDERUNG DES BLÄHENS DAVON

MÉTHODE DE RÉDUCTION DE LA CROISSANCE EXCESSIVE DES BACTÉRIES FILAMENTEUSES DANS DES BOUES ACTIVÉES, PROCÉDÉ DE RÉDUCTION DU FOISONNEMENT DES BOUES ACTIVÉES, ET UTILISATION D'ORGANISMES NATURELS DANS LES BOUES ACTIVÉES POUR EMPÊCHER LE FOISONNEMENT DE CES BOUES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **06.11.2007 PL 383707**

(43) Date of publication of application:
**04.08.2010 Bulletin 2010/31**

(73) Proprietor: **Uniwersytet Jagiellonski
31007 Krakow (PL)**

(72) Inventors:
• **PAJDAK-STOS, Agnieszka
PL-30-065 Krakow (PL)**
• **FIALKOWSKA, Edyta
PL-31-457 Krakow (PL)**

(74) Representative: **Witek, Rafal et al
WTS Patent Attorneys
Witek, Sniezko & Partners
ul. Rudolfa Weigla 12
53-114 Wroclaw (PL)**

(56) References cited:
**EP-A- 1 712 525          CH-A5- 621 751
JP-A- 2004 008 896      US-A1- 2006 086 662**

• **FIALKOWSKA E ET AL: "The role of Lecane rotifers in activated sludge bulking control" WATER RESEARCH, ELSEVIER, AMSTERDAM, NL, vol. 42, no. 10-11, 1 May 2008 (2008-05-01), pages 2483-2490, XP022650766 ISSN: 0043-1354 [retrieved on 2008-02-19]**
• **NATUSCKA M. LEE ET AL: "use of protozoa and metazoa for decreasing sludge production in aerobic wastewater treatment" BIOTECHNOLOGY LETTERS, vol. 18, no. 4, April 1996 (1996-04), pages 429-434, XP002515223**
• **NATUSCKA M. LEE AND THOMAS WELANDER: "REDUCING SLUDGE PRODUCTION IN AEROBIC WASTEWATER TREATMENT THROUGH MANIPULATION OF THE ECOSYSTEM" WATER RESEARCH, vol. 30, no. 8, 1996, pages 1781-1790, XP002515224 Pergamon**

EP 2 212 255 B1

• PUIGAGUT ET AL: "Effects of particulate and soluble substrates on microfauna populations and treatment efficiency in activated sludge systems" WATER RESEARCH, ELSEVIER, AMSTERDAM, NL, vol. 41, no. 14, 21 June 2007 (2007-06-21), pages 3168-3176, XP022125525 ISSN: 0043-1354

• ROSSETTI S ET AL: ""Microthrix parvicella'', a filamentous bacterium causing bulking and foaming in activated sludge systems: a review of current knowledge" FEMS MICROBIOLOGY REVIEWS, ELSEVIER, AMSTERDAM, NL, vol. 29, no. 1, 1 January 2005 (2005-01-01), pages 49-64, XP004713397 ISSN: 0168-6445

**Description**

The subject of the invention is a method of reducing excessive growth of filamentous bacteria in activated sludge, the process of reducing the bulking of activated sludge and use of naturally occurring organisms in the activated sludge to prevent its bulking. In more detail the invention concerns the biological method of reducing the overgrowth of filamentous bacteria causing operating problems in sewage treatment plants, by using organisms - rotifers - naturally occurring in activated sludge.

Bulking of sludge is one of the most prevailing, and simultaneously the most serious, operating problems in sewage treatment plants worldwide. Up till now, methods of filamentous bacteria control have been based primarily on dosage of chemical agents, this being not only expensive, but also presumably having a disadvantageous effect on the natural environment. At present, the greatest problems in most Polish and European sewage treatment plants are connected with excessive growth of filamentous bacteria *Microthrix parvicella.*

The activated sludge is primarily made up of bacteria, protozoa and metazoa representatives. The most significant role in removal of contamination is played by bacteria, especially heterotrophic, nitrifying and denitrifying, poly-P and those accumulating glycogen. In spite of the fact that activated sludge has been applied for many years in sewage treatment and the method is applied on the global scale, foaming and bulking caused by excessive growth of filamentous bacteria still remains a problem.

Research conducted by Eikelboom (1975, 1981) in the seventies of the XX century has shown that approximately 30 types of filamentous organisms can be found in municipal sewage. Further research conducted globally has shown that 10 types of filamentous bacteria can be responsible for bulking of activated sludge. It has been stated that *Microthrix parvicella* is the most frequently occurring bacteria causing bulking of sludge in Europe, South Africa and Australia (Blackbeard et al. 1986, Kristensen et al. 1994, Seviour et al. 1994, Eikelboom et al. 1998, Wanner et al. 1998), while in the United States bacteria types 1701 and 021N are most frequently observed (Seviour & Blackall 1999).

Various methods have been developed to resolve the problems connected with bulking and foaming. Some of these methods are non-specific and are aimed at improving sedimentation properties of the sludge, but they do not eliminate the cause of the problem. Most frequently applied methods include addition of synthetic organic polymers, inorganic coagulants and flocculants, such as aluminium and iron salts, talc, chlorine and hydrogen peroxide. However, all these methods are burdened with some shortcomings such as high costs, increase of sludge mass, disadvantageous influence on the nitrification process (Jenkins et al. 2004) and are not always effective. Seka and co-authors (2001) have shown that 021N type bacteria, from two different sewage plants, identified by fluorescence hybridization *in situ,* exhibit different susceptibility towards the same chemical compounds - chlorine. In one case the 021N type had been shown to be susceptible to action of chlorine, in the second case it was resistant to it. Application of various types of selectors (Tandoi et al. 2006) is another method of limiting problems connected with bulking of sludges. In many cases, introduced selectors solve problems of sludge bulking, but not in all cases, especially when one has to deal with *Microthrix parvicella* (Jenkins et al. 2004). Relatively little attention has been paid to problems concerning elimination of filamentous bacteria with the use of their natural enemies occurring in activated sludge. Inamori and co-authors (1991) have shown that two species of ciliates, with a cytopharyngeal basket, are capable of feeding on filamentous bacteria type 021N and *Sphaerotilus natans.* The authors suggest that bulking can be eliminated quite quickly if the concentration of ciliates is sufficiently high. Also Drzewicki and Hul (1997), in experiments conducted in a sewage treatment plant, have shown that ciliate *Trithigmostoma cucullus,* if present in high concentrations, are capable of significantly limiting the density of type 021N bacteria.

In patent descriptions US4891136 (publ. 1990-01-02) and US4772396 (publ. 1988-09-20) a method has been presented of sludge bulking control in an oxygen sewage treatment process, by control of nitrogen compounds metabolism and continuous addition of non-filamentous bacteria.

In patent description EP1483211 (publ. 2004-12-08) a biological method of sewage treatment has been described. The solution refers to oxygen decomposition of liquid sewage, in which part of these discards and/or mixture subjected to decomposition is ground in order to reduce the mean dimension of biomass particles and other solid particles in the mixture to dimensions smaller than 10 micrometers, for example by applying destructive cavitation with a pressure drop between 2 and 7.5 bar. Grinding leads to formation of particles, preferentially fed on by predacious organisms present in the sewage decomposition phase, so that bacteria and biomass particles become nutriment for them and in this way they reduce the amount of biomass and solid particles produced during decomposition.

In patent description CH621751 (publ. 1981-02-27) the process has been presented of biochemical treatment of contaminated water containing organic residue, in which filamentous bacteria develop and/or contribute to bulking of sludge.

In patent application CN1587126 (publ. 2005-03-02) an energy-saving method has been presented of sewage treatment, in which development of bacteria is observed, at a low dissolved oxygen concentration. In this solution biological sewage treatment includes the following stages: aeration of sewage in an aeration tank, containing a liquid mixture of the activated sludge with dissolved oxygen at a 0.4-0.8 mg/l concentration; storage in a second intermediate tank in order to separate the sludge from water, draining of the supernatant, recirculating of a part of the sludge to the aeration tank in a quantity of 85-105% and draining of excessive sludge, and stagnation of remaining activated sludge in the second catch basin for not less than two and a half hours, at an 800-3000 mg/l activated sludge concentration, or not less than four hours, if the activated sludge concentration is equal to 3000-7000 mg/l. This solution allows utilisation of filamentous bacteria in order to increase efficiency of the purification process.

In patent application JP2006289368 (publ. 2006-10-26) an agent has been presented preventing bulking of activated sludge. This agent is a mixture of components described by the general formula $R_2$-Y with the component containing at least a cationic group. In the compound of formula $R_2$ an unsaturated bond is present of the hydrocarbon residue in the molecules and Y derivatives expressed as the $OSO_3M$ group, acting on bacteria causing bulking, where M is hydrogen or a metal.

In patent application JP2006272258 (publ. 2006-10-12) inhibition of bulking caused by filamentous bacteria has been described. In the reactor used for biological treatment of organic sewage by contact with the activated sludge, the slurry from the activated sludge is passed through a tank filled with a substance containing trichloroisocyanuric acid, so that the slurry comes in contact with the trichloroisocyanuric acid before it is recirculated to the reactor in order to inhibit the bulking process.

In patent application JP2003112195 (publ. 2003-04-15) a method of sewage treatment has been described. When aeration is stopped, the treated sewage drainage time and drainage time of excessive sludge are determined by measurement of the value obtained from continuous sludge sedimentation rate measurements performed with a sensor in the biological reactor. Process parameters are determined on the basis of the sedimentation rate. When the process proceeds in a normal way, it is controlled automatically. When the process is disturbed and the sludge concentration increases (MLSS), the process is automatically controlled and the quantity of removed sludge increases. When the process is disturbed and bulking of sludge is recorded, automatic control is stopped, an alarm is started and the process is manually controlled.

In patent description JP11047783 (publ. 1999-02-23) a method has been presented of activation of the activated sludge. In this method the activation of sludge is based on contact of the medium for activated sewage with the bulking control agent in the mixing chamber for 26-96 hours.- The material obtained in this way is passed to the location in which the retention time is measured in the aeration tank, e.g., in the place of inflow of raw sewage. Next, at least one type of recirculated sewage, raw sewage, water in the aeration tank and aerated purified water are used as a medium activating sewage.

In patent description JP8309382 (publ. 1996-11-26) a method of bulking process control has been described. Protease of microbe origin was tested, acting in a neutral or basic environment. Protease is added to the activated sludge tank in order to perform selective bacteriolysis without interfering with the cultivation process of useful organisms present in sewage, bulking control and improvement of activated sludge sedimentation. At this time protease is used in sewage at an exemplary concentration of 100 ppm - 1000 ppm, in order to control the bulking process. Protease can be applied during bacteriolysis in relation to bacteria from the spherocillus group. The protease addition process can be applied as: direct addition to activated sludge, mixing with recirculated sludge or raw sewage, etc.

In patent description JP7116687 (publ. 1995-05-09) the method has been presented of control of bulking caused by filamentous bacteria. The separated liquid is mixed with the activated sludge and aerated in the aeration tank. Sewage is separated in the solid and liquid phase separation tank and the separated liquid is removed as treated water. Some of separated sewage is returned to the aeration tank as recirculated sludge, while the remainder is removed as excess sludge. Also situations may occur, in which filamentous bacteria, such as Sphaerotilus, undergo proliferation in the activated sludge and initiate the bulking process. A cationic or amphoteric surfactant, with primary to quaternary amine groups, is added during the process of activated sludge treatment, in order to prevent processes such as swellling. The sewage bulking process is controlled in this way due to a phenomenon in which filamentous bacteria in the activated sludge shrink in the capsule or they fall out and decompose.

In patent description JP2157097 (publ. 1990-06-15) a bacterial flocculant has been described and a method of bulking process control. One may prevent bulking of sludge by stimulating growth of Rhodococcus or Nocardia bacteria and by presence of calcium chloride in activated sludge. Rhodococcus erythropolice KR-256-2, FERM-P No. 3923 bacteria are representative strains for Rhodococcus or Nocardia bacteria producing flocculant.

In patent application WO02102719 (publ. 2002-12-27) the method of inhibiting development of filamentous bacteria has been described. A method for inhibiting the adverse effects on settling and compaction in aqueous systems such as biological waste treatments systems is disclosed. The method comprises adding to the aqueous system a treatment comprised of a combination of a biologically active surfactant and a divalent metal active species. The preferred biologically active surfactants are alkyl ethoxylates. The preferred divalent active species are calcium and/or magnesium control agents such as polyepoxysuccinic acid, hydroxyethylidine diiphosphonic acid, and ethylene di tetraacetic acid.

In patent description JP1155995 (publ. 1989-06-19) an improved system has been described of treatment of sewage containing pectins. Bacteria characterised by strong decomposing properties are chosen from bacteria decomposing pectins, belonging to filamentous bacteria and are cultivated on a nutrient containing pectin. Aeration of the supernatant added to the nutrient is next repeated in order to generate bacteria decomposing pectins. After initial decomposition of pectin in sewage water by bacteria decomposing pectins, it becomes further completely decomposed in the sewage treatment process. As the result of this reaction one avoids mistaken adsorption or intrusion of high-polymer pectin to the activated sludge and inclusion of such a deposit in the reactor. In this way one avoids a decrease of the activity of sludge in BOD decomposition and the COD concentration in sewage is decreased in a sufficient degree. In patent application CN1433975 (publ. 2003-08-06) a process of sewage and sewage water treatment has been described. This process includes a procedure of sediment removal from sewage, oxygen-free treatment, aeration and sedimentation. This solution includes two sieve layers - upper and lower, allowing filtration in order to remove sediments, oxygen-free treatment is performed in an oxygen-free basin and requires addition and cultivation of filamentous and photosynthesising bacteria in order to decompose organic matter in water. The aeration process proceeds in an aeration basin and requires dosage and cultivation of zooglea and photosynthesising bacteria, the aerating head is placed in water in order to deliver oxygen, the gas essential for decomposition of organic matter.

In patent description JP7328681 (publ. 1995-12-19) the method has been presented of preventing and removing filamentous bacteria with the use of a bacteriolytic enzyme. In order to achieve a rapid effect counteracting bulking of active sewage caused by filamentous bacteria, without hindering development of useful microorganisms and without undesirable effects for the environment, subtilisines are added of bacteriolytic activity on filamentous bacteria in the activated sludge tank. Subtilisine is added in the activated sludge tank, in quantities of 10 ppm to 10000 ppm, advantageously 100 ppm to 1000 ppm. Subtilisine is added directly to the activated sludge tank or during mixing with recirculated sewage or during inflow of sewage to the tank. Through addition of subtilisine to the activated sludge, in which the bulking process occurs, filamentous bacteria are subjected to selective and violent bacteriolysis, hence one can avoid bulking.

In patent description JP6114391 (publ. 1994-04-26) a method of sewage treatment has been presented, in which the sediment state is automatically analysed at intervals from 10 minutes to one hour by application of a microscope immersed in the aeration tank and processing of the image, developed by a graphical processor and an operating device. Image processing allows determination of parameters relating to filamentous and agglutinating bacteria found in the group of bacteria in the sediment, the length of filamentous bacteria is measured, as well as the area, brightness, transfer area and transfer brightness, whilst the measured parameters are input to the device, which performs analysis on the basis of this information. On the basis of obtained measurements parameters are controlled, characterising filamentous and agglutinating bacteria, by a change in settings of the quantity of inflowing water and the aeration degree and stabilisation of sewage also is possible.

In patent description JP6063580 (publ. 1994-03-08) elimination of sludge bulking has been described and the agent causing elimination of sludge bulking in case of sewage. The agent contributing to elimination of bulking is a chlorine or fluorine derivative of isophthalonitrile, which is added to the activated sludge, in quantities 0.01 to 1 pts. wt. to 100 pts. wt. of dry mass contents of activated sludge, by which filamentous bacteria are eliminated, reducing bulking.

In patent description JP6047391 (publ. 1994-02-22) the method has been described of inhibiting multiplication and development of filamentous fungi during treatment of organic sewage. Suppression is possible by flocculation of the substance produced by Rhodococcus or Nocardia bacteria species and calcium chloride present in the system. The agent responsible for suppression of multiplication and development of fungi is obtained by lyophilisation of Rhodococcus erythropolis species.

In patent description JP5208197 (publ. 1993-08-20) a method has been presented of preventing bulking of activated sludge. If sewage and activated sludge are introduced into an aeration tank and in the case of biological treatment of organic substances, 20-50% of sea water are mixed with sewage. As the efficiency of microorganisms in organic sewage is not deteriorated, with the exception of filamentous bacteria, the quality of water and thickening agent becomes determined and a stable process can be conducted.

In patent description JP4261105 (publ. 1992-09-17) a germicide has been presented for filamentous bacteria and the method of inhibiting the process of bulking of activated sludge. The germicide contains an active substance, the product of a cationic reaction obtained as the result of a reaction of an imidazole compound with epihalohydrin and is capable of killing filamentous bacteria.

In patent description JP4131193 (publ. 1992-05-01) the method has been described of elimination of filamentous bacteria in sewage. The sludge collected from the bottom of the sedimentation tank is partially recirculated through the return pipe to the oxygen-free tank. The sludge remains in the tank and is mixed for a determined time, next flows to the aeration tank with added raw water. As this method allows recirculation of sewage from the sedimentation tank to the aeration tank with leaving in the oxygen-free tank for a determined time in an oxygen-free atmosphere, it allows control of development of filamentous bacteria, which are aerobic bacteria. In this way it is possible to reduce bulking of the sludge and obtaining of a satisfactory purification degree.

In patent description JP3012293 (publ. 1991-01-21) application has been described of a 20-70% aqueous solution of monoalkylamine or, depending on circumstances, monoalkylamine and dialkylamine, in a hermetically closed container, when it is filled with gas nitrogen. Next epihalohydrin is added, whilst controlling the temperature maintained between 30-100°C, and the reaction occurs between the mentioned amine so that a polymer is received, soluble in water. An aqueous solution is prepared containing 1-10 wt.% of this polymer soluble in water and the inflowing sewage is mixed with an aqueous solution, so that it is introduced to the aerating tank. In this way bulking of sludge is reduced, caused by bacteria such as type 021N.

Natuscka M. Lee and Thomas Welander in article entitled "Reducing sludge production in aerobic wastewater treatment through manipulation of the ecosystem" published in Water Reasearch vol. 30, no. 8, 1996 disclose that the combinantion of certain protozoa and metazoan can decrease sludge production in aerobic wastewater treatment.

In patent application JP2004008896A (publ. 2004-01-15) has been described the method of suppressing the multiplication of the filamentous microorganism, which is performed by adding a bacteriophage having a property of being infected with the filamentous microorganism causing the bulking of activated sludge and carrying out bacteriolysis.

In spite of many research described above devoted to searching solutions, which would limit problems of activated sludge bulking and foaming, technologists still cannot indicate a reliable remedy in a situation where chemical means used for controlling filamentous bacteria fail, and sewage treatment plants have no possibility of introducing significant technological changes. In a response to requirements for an effective, inexpensive and safe method of preventing bulking of sludge, it is necessary to find new, biological methods improving sedimentation properties of sludge, hence reducing the bulking process.

The aim of this invention is supply of means, which could be used for biological reducing of excessive growth of filamentous bacteria, causing operating problems in sewage treatment plants, by using organisms - rotifers - naturally occurring in the activated sludge. Application of biological methods of filamentous bacteria control , especially *M. parvicella,* may lead to significant limiting the control costs of the sludge bulking phenomenon in sewage treatment plants.

Realisation of such an aim and solving of problems (described in the state of art, connected with bulking and foaming of activated sludge, and creation of an effective, inexpensive and safe method of preventing sludge bulking, based on biological methods improving sludge sedimentation properties, simultaneously characterised by a positive effect on sludge sedimentation properties and interacting with the natural environment in a lesser degree, have been achieved in this invention.

The subject of this invention is a process of reducing excessive growth of filamentous bacteria in activated sludge, characterised in that *Lecane inermis* rotifers are introduced into the activated sludge containing filamentous bacteria *Microthrix parvicella, N. limicola* and type 021 N, and they eat said filamentous bacteria and decrease their density in activated sludge, wherein the volume ratio of rotifer inoculum to activated sludge is in the 1:20 to 1:80 range, at a rotifer density in the inoculum of 500 - 3000/ml.

Preferably, the first stage includes multiplication of rotifers in aerated tanks, the second stage includes analysis of rotifer effectiveness in relation to given sludges, where the activated sludge in the tested sewage treatment plant is mixed with rotifer inoculum in a laboratory experimental system with several repetitions, whilst the sludge without addition of rotifers is treated as a control sample, so that analysis of rotifer density changes in time and comparison of filamentous bacteria concentration in the experimental and control sample allows statement of effectiveness of the method for a given sludge, and next in the third stage inoculum is introduced to chambers of reduced capacity immersed in the activated sludge chamber, where multiplication of rotifers takes place.

Preferably, rotifers are multiplied directly in activated sludge chambers.

Preferably, rotifers are multiplied outside activated sludge chambers.

Preferably, the FI index of filamentous bacteria decreases with time, and the density of rotifers increases.

The next subject of the invention is the use *Lecane inermis* rotifers in the process of preventing bulking of activated sludge for eating away filamentous bacteria, wherein said activated sludge contains filamentous bacteria *Microthrix parvicella, N. limicola* and type 021N.

Preferably, the volume ratio of rotifer inoculum to activated sludge, is in the 1:20 to 1:80 range, at a rotifer density in the inoculum of 500 - 3000/ml.

The enclosed figures allow better explaining of the essence of the invention.

**Figure 1** presents the correlation between the rotifer density (rotifer index) and the filamentous bacteria index (FI) in sewage treatment plants: PK (a), ZPM (b), CZ (c) and WW (d), where
1a) r = -0.4968, p=0.001, 1b) r = -0.5476, p=0.0056, 1c) p > 0.5, 1d) r =0.313, p=0.08.

**Figure 2** presents the correlation between the testate amoeba density (testate amoeba index) and the filamentous index (FI) in the CZ treatment plant, where r=-0.41, p= 0.01.

**Figure 3** presents the mean filamentous density index (DF) 7 days after introducing rotifers into the sludge in the CZ treatment plant (a), WW (b) and SU (c).

**Figure 4** presents the mean filamentous density index (DF) 7 days after introducing rotifers into the sludge in the WW treatment plant in a laboratory experiment conducted in beakers.

**Figure 5** presents the mean number of rotifers/ml in beakers at the start, on the 5th and on the 7th day of the experiment.

Figure 6 presents the volume of the sludge after 30 minutes from the moment of uniform mixing in a graduated cylinder in the control sample (1-4) and the experiment (5-8).

Below, examples of realisation have been presented of the invention defined above.

**Example**

During microscopic research of activated sludge conducted by us, we noticed that at least two organisms - rotifers and testate amoeba - digest filamentous bacteria. Hence, we decided to check, among numerous data gathered by us, if there are interactions, and if so, what kind of interactions, between rotifers and/or amoeba and filamentous bacteria. Also, we performed numerous experiments with the aim of determination if rotifers transferred from cultures to the activated sludge from various sewage treatment plants would be able to survive, proliferate and eliminate filamentous microorganisms. The main aim of the second experiment was checking if rotifers eliminating filamentous bacteria could have an effect on sedimentation properties of sewage.

For three years data were collected from 4 sewage treatment plants in southern Poland. Samples approx. 200 ml in volume were taken from aeration chambers and sent to the laboratory. In order to avoid oxygen deficit in transported samples, containers were filled up to half of the maximum volume. Samples were always analysed during 24 hours from sampling. Samples were analysed in accordance with the estimation method of Eikelboom (Eikelboom, 2000), which does not require precise counting of organisms in the sample and is based on estimation of their density. The density of filamentous bacteria is assessed according to a 0 to 5 scale, while in the case of protozoa and higher organisms (rotifers, nematodes, Oligachaeta) in the 0 to 3 scale. In the research half values have been introduced in order to perform more precise assessment of microorganisms density.

Next analysis was performed of the correlation between the density of filamentous bacteria and other organisms occurring in activated sludge - 133 collected samples have been analysed. The correlation has been analysed between ciliates, flagellates, naked amoebae, testate amoebae, rotifers and nematodes.
It has been found that the only organisms, the number of which negatively correlates with filamentous bacteria density, are testate amoebae and rotifers.

Due to the fact that during microscopic observations rotifers were frequently seen eating filamentous bacteria, a series of laboratory experiments had been conducted, in order to check if rotifers could indeed significantly decrease filamentous bacteria density in the sludge. *Lecane inermis* rotifers were used in experiments. Their clones were derived earlier from single organisms, taken from one of the sewage samples and cultivated on Petri dishes in Zywiec mineral water. They fed on bacteria cultivated on rice seeds (sterilised earlier with boiling water) added to the culture medium. Cultures were maintained at a light intensity of 70 $\mu$m photon m$^{-2}$ s$^{-1}$, whilst maintaining the pattern 12 hours of light: 12 hours of darkness, at a temperature of 20°C.

Activated sludge used for experiments was obtained from two sewage treatment plants tested earlier (further designated as CZ and WW) and one plant not tested earlier, but continuously having problems with sludge bulking (further designated as SU).

Before starting experiments, the filamentous bacteria morphotypes was determined and the density was estimated in each sewage treatment plant.

| Sludge from the sewage treatment plant | Filamentous index FI | Bacteria |
|---|---|---|
| CZ | 3.5 | Microthrix parvicella - decidedly dominating |
| WW | 4.5 | Microthrix parvicella - the only occurring bacteria |
| SU | 4.0 | Microthrix parvicella and Actinomycetes - occurring in equal proportions |

Experiments were conducted in 24-wells plates for tissue cultures. 1 ml of activated sludge was measured into 16 wells. Eight wells were used for control, while into the remaining 100 rotifers each were introduced. During hauling of rotifers approx. 100 $\mu$l of Żywiec mineral water entered experimental wells. In order to maintain identical chemical parameters of the activated sludge, the same amount of mineral water was poured into control wells. The plates were placed in culture chambers in the dark at a temperature of 20°C. Such a prepared experimental system was repeated for each sludge separately.

After a week from each wells ten 25 $\mu$l volume subsamples were taken and were mixed with 10 $\mu$l of acridine orange on a microscope slide. Acridine orange allowed all live filamentous bacteria to be distinctly visible under a fluorescence microscope. Subsamples were covered with a cover glass of 22 x 22 mm dimensions, and next under the microscope photos were taken of ten fields of view chosen at random from each sample. Each image was analysed by the LUCIA Image Analysis System. The software lays a frame of 28 x 28 $\mu$m dimensions on the image. The number of intersections of filamentous bacteria with the frame was counted, the value obtained in this way was defined as the DF (density factor). For each experiment and control sample the mean value of the DF index was next calculated. The Nikon Eclipse 80i fluorescence microscope with a B-2A filter was used (450-490 nm excitation) at full 1000x magnification.

Analysis of data collected during three years from four tested sewage treatment plants has shown that the index of filamentous bacteria (FI) negatively correlates with the rotifer (r = -0.3182, p<0.001) and testate amoeba density (r = -0.3805, p<0.001). FI correlations with densities of other groups of organisms such as: ciliates, Flagellata, amoebina and nematodes have been found to be statistically insignificant. Analysis of data performed independently for each sewage treatment plant has shown that correlations:

| Sludge from the sewage treatment plant | rolifer density versus filamentous bacteria index | correlation between testate amoeba and FI |
|---|---|---|
| PK | r = - 0.4968, p = 0.001 | insignificant |
| ZPM | r = -0.5476, p = 0.0056 | r = 0.3817, p = 0.06 |
| CZ | Insignificant, p>0.5 | r = -0.41, p = 0.01 |
| WW | r = 0.313, p = 0.08 | insignificant |

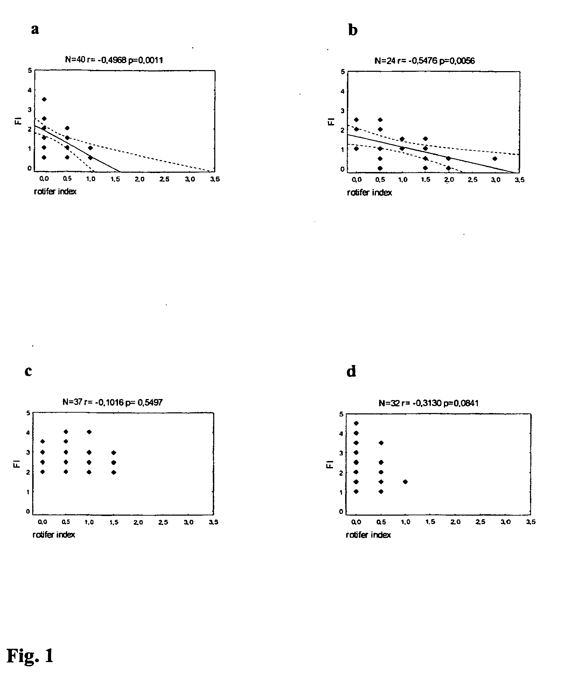

- rotifer density versus filamentous bacteria index were negative and statistically significant for the PK sewage treatment plant (Fig. 1a., r= - 0.4968, p=0.001) and ZPM (Fig. 1b., r= -0.5476, p=0.0056);
- in the CZ sewage treatment plant the correlation was found to be insignificant (Fig. 1c, p>0.5);
- in the WW sewage treatment plant it was weakly significant (Fig. 1d, r = 0.313, p = 0.08).

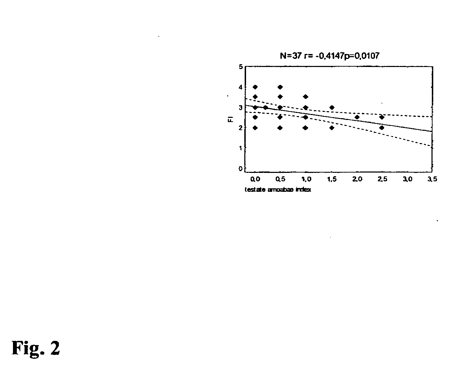

However, in the case of the CZ sewage treatment plant it has been shown that a statistically significant negative correlation exists between testate amoeba and FI (Fig. 2, r = -0.41, p = 0.01). In ZPM the correlation was weakly significant (r = 0.3817, p=0.06), while in the case of WW and PK insignificant.

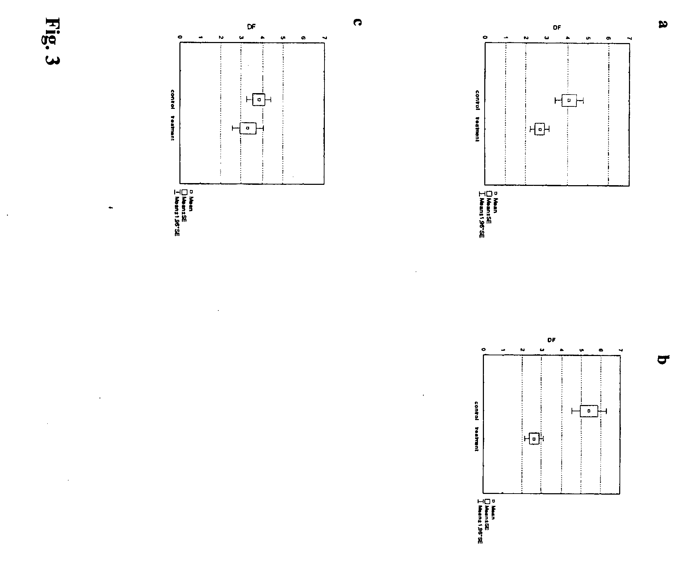

Graphs 3 a-c show results of experiments conducted in the laboratory scale, in which rotifers have been added to sludge samples from three different sewage treatment plants: CZ, WW and SU. In two cases: CZ (Fig. 3a) and WW (Fig. 3b) significant differences have been shown in the density of filamentous bacteria between the treatment and control samples. The t test for independent data confirmed that rotifers effectively decrease the density of filamentous bacteria in activated sludge from the CZ (t = -3.411, df = 158, p<0.001) and WW plant (t = -5.484, df= 158, p<0.001), and this effect was less distinct in the case of sludge from the CZ plant. On the other hand, statistically significant differences have been shown between the treatment and control samples in the experiment with the use of sludge samples from the SU plant (Fig. 3c).

| Sludge from the sewage treatment plant | t Test | df |
|---|---|---|
| CZ | -3.411, p<0.001 | 158 |
| WW | -5.484, p<0.001 | 158 |
| SU | No statistically significant differences between the treatment and control samples | |

The obtained results encouraged us to repeat the experiment in a greater scale. WW sludge was chosen for this experiment due to a high filamentous index (FI = 4.5), represented by *M. parvicella* only, and also because rotifer genus *Lecane* was not found in this sludge. The experiment was conducted in 8 beakers of 2 litre capacity. Each beaker contained 1 litre of activated sludge. 50 ml of rolifer suspension were added to each of the four beakers, in which the rolifer density was equal to approx. 3200 specimen per ml. This gave a density of approx. 150 specimen per ml in the mixture with activated sludge. 50 ml of Żywiec mineral water were added to four control beakers. The sludge in beakers was aerated with the use of aquarium pumps and maintained at a temperature of 20°C. Using the method described above, the DF index value was calculated 24 hours and 7 days after introducing rotifers to the system. On the fifth and seventh day also the abundance of rotifers was counted in 8 subsamples of 25 $\mu$l volume, taken from each beaker. Next, the mean number of rotifers in 1 ml of sludge was calculated. On the eighth day of the experiment 100 ml of sludge was transferred from each beaker to a measuring cylinder and after half an hour the sludge volume was checked, separated from treated sewage.

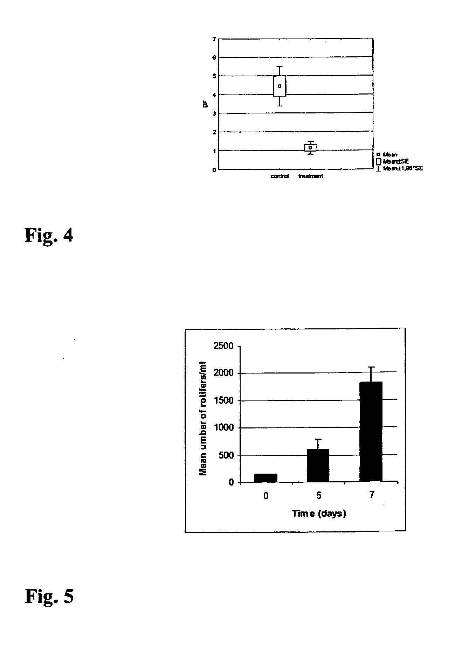

Results of experiments conducted in a greater scale, in two litre beakers, confirmed the ability of *Lecane* genus rotifers to reduce the number of filamentous bacteria in the sludge. At the beginning of the experiment the mean density of filamentous bacteria was similar in control and experimental vessels. After a week, the density of filamentous bacteria in vessels with rotifers significantly decreased (t = 3.392, df = 157, p<0.001), while in the control sample it was maintained at the same level. At the end of the experiment the difference between the density index of filamentous bacteria (DF) in experimental and control vessels was very significant (Fig. 4, t = -5.9437, df = 157, p<0.001).

The density of rotifers during the experiment significantly increased (Fig. 5). The density increase was lower at the beginning - the number of rotifers increased by four times during five days, while during the last two days of the experiment by 3.5 times. As the exponential increase is described by formula $N_t = n_0 e^{rt}$, the increase coefficient has been calculated as: $r = \dfrac{1}{t}\left(\ln n_t - \ln n_0\right)$, where $t$ is the day of the experiment, $n_t$ -the number of rotifers on day $t$ of

the experiment and $n_0$ the initial number of rotifers.

During the first 5 days the increase coefficient oscillated in the 0.2-0.3 limits, while during the last two days it reached a value of 0.5-0.8.

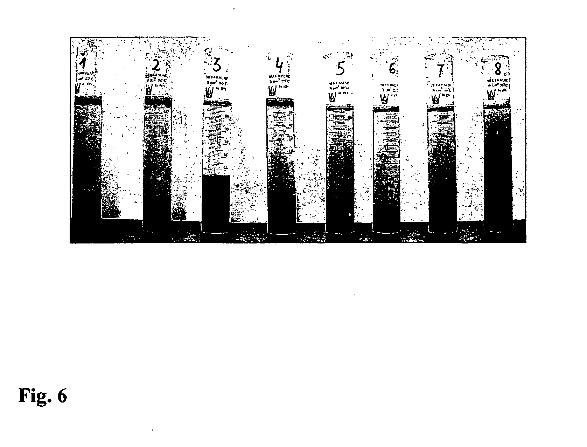

In Fig. 6 differences have been presented in the sludge volume after 30 minutes from transferring to measuring cylinders after uniform mixing in beakers. The sludge volume is significantly lower in cylinders with sludge with rotifer admixture (cylinders 5-8) than in control cylinders (1-4). In experimental cylinders the sludge volume reached values in the 14 to 18 ml range, while in the control cylinders in the 21 to 44 ml range.

## Claims

1. Process of reducing excessive growth of filamentous bacteria in activated sludge, **characterised in that** *Lecane inermis* rotifers are introduced into the activated sludge containing filamentous bacteria *Microthrix parvicella, N. limicola* and type 021 N, and they eat said filamentous bacteria and decrease their density in activated sludge, wherein the volume ratio of rotifer inoculum to activated sludge is in the 1:20 to 1:80 range, at a rotifer density in the inoculum of 500 - 3000/ml.

2. Process according to claim 1, **characterised in that** the first stage includes multiplication of rotifers in aerated tanks, the second stage includes analysis of rotifer effectiveness in relation to given sludges, where the activated sludge in the tested sewage treatment plant is mixed with rotifer inoculum in a laboratory experimental system with several repetitions, whilst the sludge without addition of rotifers is treated as a control sample, so that analysis of rotifer density changes in time and comparison of filamentous bacteria concentration in the experimental and control sample allows statement of effectiveness of the method for a given sludge, and next in the third stage inoculum is introduced to chambers of reduced capacity immersed in the activated sludge chamber, where multiplication of rotifers takes place.

3. Process according to claim 2, **characterised in that** rotifers are multiplied directly in activated sludge chambers.

4. Process according to claim 2, **characterised in that** rotifers are multiplied outside activated sludge chambers.

5. Process according to claim 2, **characterised in that** the FI index of filamentous bacteria decreases with time, and the density of rotifers increases.

6. Use of *Lecane inermis* rotifers in the process of preventing bulking of activated sludge for eating away filamentous bacteria, wherein said activated sludge contains filamentous bacteria *Microthrix parvicella, N. limicola* and type 021 N.

7. Use according to the claim 6, **characterised in that** the volume ratio of used rotifers inoculum to activated sludge, is in the 1 :20 to 1 :80 range, at a rotifer density in the inoculum of 500-3000/ml.

## Patentansprüche

1. Verfahren zur Reduzierung des exzessiven Wachstums von filamentösen Bakterien in aktiviertem Schlamm, **dadurch gekennzeichnet, dass** *Lecane inermis* Rotifera in den aktiviertem Schlamm enthaltend die filamentösen Bakterien *Microthrix parvicella, N. limicola* und Typ 021 N eingeführt werden und diese die filamentösen Bakterien verzehren und deren Dichte in dem aktivierten Schlamm verringern, wobei das Volumenverhältnis von Rotifera-Inoculum zu aktiviertem Schlamm im Bereich von 1:20 bis 1:80 liegt, bei einer Rotifera-Dichte in dem Inoculum von 500 - 3000/ml.

2. Verfahren nach Anspruch 1, **dadurch gekennzeichnet, dass** die erste Phase die Vermehrung von Rotiferen in belüfteten Tanks einschließt, die zweite Phase die Analyse der Effektivität der Rotiferen in Bezug auf bestimmte Schlämme einschließt, wobei der aktivierte Schlamm in der getesteten AbwasserBehandlungsanlage mit Rotifera-Inoculum in einem experimentellen Laborsystem unter mehreren Wiederholungen gemischt wird, während der Schlamm ohne die Hinzufügung von Rotiferen als eine Kontrollprobe behandelt wird, so dass die Analyse der Dichteveränderungen der Rotiferen über die Zeit und der Vergleich der Konzentration an filamentösen Bakterien in der experimentellen und der Kontrollprobe eine Aussage über die Effektivität des Verfahrens für einen bestimmten Schlamm ermöglicht, und als nächstes in der dritten Phase Inoculum in Kammern mit verringerte Kapazität eingeführt wird, das in der Kammer mit dem aktivierten Schlamm eingetaucht wurde, wo die Vermehrung von Rotiferen stattfindet.

3. Verfahren nach Anspruch 2, **dadurch gekennzeichnet, dass** die Rotiferen direkt in den Kammern mit aktiviertem Schlamm vermehrt werden.

4. Verfahren nach Anspruch 2, **dadurch gekennzeichnet, dass** die Rotiferen außerhalb der Kammern mit aktiviertem Schlamm vermehrt werden.

5. Verfahren nach Anspruch 2, **dadurch gekennzeichnet, dass** der FI Index von filamentösen Bakterien über die Zeit hinweg abnimmt, und die Dichte von Rotiferen ansteigt.

6. Verwendung von *Lecane inermis* Rotifera in dem Verfahren der Verhinderung der Blähschlammbildung von aktiviertem Schlamm für einen Verzehr von filamentösen Bakterien, wobei der aktivierte Schlamm die filamentösen Bakterien *Microthrix parvicella, N. limicola* und Typ 021 N enthält.

7. Verwendung nach Anspruch 6, **dadurch gekennzeichnet, dass** das Volumenverhältnis von verwendetem Rotifera-Inoculum zu aktiviertem Schlamm im Bereich von 1:20 bis 1:80 liegt, bei einer Rotifera-Dichte in dem Inoculum von 500 - 3000/ml.

**Revendications**

1. Procédé de réduction de la croissance excessive de bactéries filamenteuses dans des boues activées, **caractérisé en ce que** des rotifères *Lecane inermis* sont introduits dans les boues activées contenant des bactéries filamenteuses *Microthrix parvicella, N. limicola* et le type 021 N, et ils mangent lesdites bactéries filamenteuses et réduisent leur densité dans les boues activées, dans lequel le rapport volumique entre l'inoculum de rotifères et les boues activées se situe dans la plage de 1/20 à 1/80, à raison d'une densité de rotifères dans l'inoculum de 500-3000/ml.

2. Procédé selon la revendication 1, **caractérisé en ce que** le premier stade comprend la multiplication de rotifères dans des cuves ventilées, le deuxième stade comprend l'analyse de l'efficacité des rotifères par rapport à des boues données, où les boues activées dans l'installation de traitement des eaux usées testée est mélangée à un inoculum de rotifères dans un système expérimental de laboratoire avec plusieurs répétitions, tandis que les boues sans addition de rotifères sont traitées en tant qu'échantillon témoin, de sorte que l'analyse de la densité de rotifères évolue dans le temps et la comparaison de la concentration des bactéries filamenteuses dans l'échantillon expérimental et témoin permet de se prononcer sur l'efficacité du procédé pour des boues données, et ensuite dans le troisième stade l'inoculum est introduit dans des chambres de capacité réduite immergées dans la chambre de boues activées, où la multiplication des rotifères se produit.

3. Procédé selon la revendication 2, **caractérisé en ce que** les rotifères sont multipliés directement dans les chambres de boues activées.

4. Procédé selon la revendication 2, **caractérisé en ce que** les rotifères sont multipliés à l'extérieur des chambres de boues activées.

5. Procédé selon la revendication 2, **caractérisé en ce que** l'indice F1 des bactéries filamenteuses diminue dans le temps, et la densité des rotifères augmente.

6. Utilisation de rotifères *Lecane inermis* dans le procédé de prévention du foisonnement des boues activées pour ronger les bactéries filamenteuses, dans laquelle lesdites boues activées contiennent des bactéries filamenteuses *Microthrix parvicella, N. limicola* et le type 021 N.

7. Utilisation selon la revendication 6, **caractérisée en ce que** le rapport volumique entre l'inoculum de rotifères utilisé et les boues activées se situe dans la plage de 1/20 à 1/80, à raison d'une densité de rotifères dans l'inoculum de 500-3000/ml.

a

N=40 r= -0,4968 p=0,0011

b

N=24 r= -0,5476 p=0,0056

c

N=37 r= -0,1016 p= 0,5497

d

N=32 r= -0,3130 p=0,0841

**Fig. 1**

Fig. 2

**a**

**b**

**c**

**Fig. 3**

**Fig. 4**

**Fig. 5**

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4891136 A
- US 4772396 A
- EP 1483211 A
- CH 621751
- CN 1587126
- JP 2006289368 B
- JP 2006272258 B
- JP 2003112195 B
- JP 11047783 B
- JP 8309382 B
- JP 7116687 B
- JP 2157097 A
- WO 02102719 A
- JP 1155995 A
- CN 1433975
- JP 7328681 B
- JP 6114391 B
- JP 6063580 B
- JP 6047391 B
- JP 5208197 B
- JP 4261105 B
- JP 4131193 B
- JP 3012293 B
- JP 2004008896 A

### Non-patent literature cited in the description

- **EIKELBOOM.** *Research conducted*
- **NATUSCKA M. LEE ; THOMAS WELANDER.** Reducing sludge production in aerobic wastewater treatment through manipulation of the ecosystem. *Water Reasearch,* 1996, vol. 30 (8